# EUROPÄISCHE PATENTSCHRIFT

(11) **EP 0 869 309 B1**
(45) Veröffentlichungstag und Bekanntmachung des Hinweises auf die Patenterteilung: **08.10.2003**
(21) Anmeldenummer: 98250065.4
(22) Anmeldetag: 24.02.1998
(51) Int. Cl.: F16M 7/00, F16M 11/14

(54) **Stützfuss**
Supporting leg
Pied d'appui

(30) Priorität: 04.03.1997 DE 19711039
(43) Veröffentlichungstag der Anmeldung: 07.10.1998
(73) Patentinhaber: Siemens Aktiengesellschaft, 80333 München (DE)
(72) Erfinder: Mertz, Otto, 64291 Darmstadt (DE); Jahns, Werner, 63500 Seligenstadt (DE)

(56) Entgegenhaltungen:
- CH-A- 287 247
- DE-A- 4 232 034
- DE-U- 9 302 290
- DE-U- 29 510 221
- US-A- 1 334 496
- US-A- 2 010 299
- US-A- 3 000 041

## Beschreibung

Die Erfindung betrifft einen Stützfuß, insbesondere zur Abstützung von Tragrahmen für Förderer gemäß dem Oberbegriff des Anspruchs 1.

Aus dem deutschen Gebrauchsmuster DE 93 02 290 U1 ist bereits ein Stützfuß bekannt, der ein als Gewindestange ausgebildetes Anschlußelement aufweist, das an einem Ende über eine Kugelgelenkverbindung mit einem Fußelement verbunden ist. Das Fußelement ist hierbei als sog. Abdeckkappe ausgebildet, die auf ihrer Oberseite eine Kugelaufnahme für einen an der Gewindestange angeordneten Kugelkopf aufweist. Auf der der Kugelaufnahme gegenüberliegenden Seite der Abdeckkappe und somit in ihrem topfartigen Bereich, können verschiedene Abstützelemente eingesetzt werden. Somit ist eine Anpassung des Stützfußes an unterschiedliche Bodenflächen möglich. Beispielsweise ist der Einsatz eines Magneten oder von Gummielementen vorgesehen. Darüber hinaus sind der Kugelkopf und die Kugelaufnahme so ausgebildet, daß sie eine Art Schnappverbindung bilden, wobei der Kugelkopf in die Kugelaufnahme eindrückbar ist. Um u.a. diese Funktion zur Verfügung stellen zu können, ist die Abdeckkappe als Spritzgußteil aus Kunststoff hergestellt. Zur Übertragung der Stützkräfte in den tellerförmigen Bereich der Abdeckkappe ist der Bereich der Kugelaufnahme mit einer wesentlich größeren Materialdicke augebildet als die übrigen Bereiche der Abdeckkappe. Dies wirkt sich nachteilig auf die Herstellkosten des Stützfußes aus.

Desweiteren ist bereits in dem deutschen Gebrauchsmuster DE 295 10 221 U1 ein weiterer Stützfuß beschrieben, der auch im wesentlichen aus einer Gewindestange und einem hiermit über eine Kugelgelenkverbindung verbundenen Fußelement besteht. Die Kugelaufnahme in dem Fußteil ist jedoch ringförmig ausgebildet und weist eine zentrale Bohrung auf, durch die eine Schraube zentral in den Kugelkopf der Gewindestange einschraubbar ist. Es ist vorgesehen, daß die Schraube nicht fest angezogen wird, so daß die Winkelbeweglichkeit zwischen der Gewindestange und dem Fußteil erhalten bleibt und gleichzeitig diese Teile zu einer Baueinheit verbunden werden. Darüberhinaus ist die Ringfläche der Kugelaufnahme als Einsatz für den Fußteil ausgebildet, so daß dessen Werkstoff unabhängig von dem übrigen Fußelement frei gewählt werden kann. Vorzugsweise ist vorgesehen, das Einsatzelement aus einem Werkstoff mit einer geringeren Festigkeit als das Fußelement und die Gewindestange auszubilden, so daß dieses als Überlastsicherung dienen kann. Auch kann bei Verschleiß das Einsatzelement leichter ausgewechselt werden.

Die US 201099 beschreibt einen Stützfuß gemäß Oberbegriff von Anspruch 1, bei dem der rohrförmige Tragabschnitt aber nach unten zurückgebogen ist.

Der vorliegenden Erfindung liegt die Aufgabe zugrunde, einen Stützfuß, insbesondere zur Abstützung von Tragrahmen für Förderer zu schaffen, dessen Belastbarkeit bei gleichzeitiger Veringerung des Herstellaufwandes verbessert ist. Diese Aufgabe wird bei einem Stützfuß, insbesondere zur Abstützung von Tragrahmen für Förderer durch die im Anspruch 1 aufgeführten Merkmale gelöst. Vorteilhafte Ausgestaltungen der Erfindung sind in den Unteransprüchen 2 bis 8 angegeben.

Erfindungsgemäß wird durch die Ausbildung des Fußelementes als Teller mit einem rohrförmigen Tragabschnitt, dessen aus der Ebene des Tellers nach oben herausragende und den Tragabschnitt abschließende Ringfläche die Kugelaufnahme für das Kugelkopfteil des Anschlußelementes bildet, erreicht, daß die Einleitung der Stützkräfte von dem Anschlußelement in das Fußelement sehr direkt erfolgt und der Tragabschnitt vorwiegend auf Druck belastet wird. Des weiteren erweist es sich als vorteilhaft, den Tragabschnitt an den Teller zentral anzuformen. Durch diese spezielle Art der Formgebung des Tragabschnittes, der über einen Radius in den Teller übergeht, kann entweder die Materialdicke minimiert werden oder der Stützfuß ist mit höheren Lasten belastbar bei Beibehaltung der bisherigen Materialdicke. Als Herstellungsverfahren für diesen Stützfuß eignet sich das Tiefziehen und somit als Material Blech. Vorzugsweise wird bei einem derartig tiefgezogenen Blech die Materialstärke des Tragabschnittes und des Tellers weitestgehend gleich sein.

Um neben der Möglichkeit einer direkten Befestigung des Tellers auf den Bodenflächen oder Konstruktionsteilen eine Dämpfung mittels des Stützfußes zu erreichen bzw. eine Anpassung an unterschiedliche Befestigungsorte ist zusätzlich an dem Außenrand des Tellers ein ringförmiger Ansatz angeordnet, dessen Außenfläche weitestehend rechtwinklig zur Oberfläche des Tellers ausgerichtet ist. Auch hier geht ebenfalls der Teller über einen Radius in den Ansatz über, und entsprechend dem Herstellverfahren des Tiefziehens wird auch hier eine weitestgehend gleiche Materialdicke vorhanden sein. Durch diese auf der dem Tragabschnitt gegenüberliegenden Seite topfartige Ausbildung des Fußelementes ist es nun möglich, beispielsweise zylinderförmig ausgebildete Platten insbesondere als Dämpfungsmaterial einzusetzen oder einzukleben. Diese Platte ist vorzugsweise komplementär zu der topfförmigen Ausbildung des Fußelementes ausgebildet, um die von dem Anschlußelement in das Fußelement eingeleiteten Stützkräfte großflächig über die Innenseite des Tellers aufnehmen zu können.

Als besonders vorteilhaft erweist sich, das Anschlußelement über ein Befestigungsmittel, insbesondere eine Schraube oder eine Niete durch die von der Innenfläche gebildete Öffnung des Halsansatzes hindurch nach Art einer Verliersicherung zu verbinden. Hierbei weist die Schraube oder die Niete in entsprechender Weise in ihrem Kopfbereich einen Durchmesser auf, der größer ist als die lichte Weite der Öffnung.

Es erweist sich als vorteilhaft, das Anschlußelement als Gewindestange auszubilden, an deren der Fußplatte zugewandten Ende das Kugelkopfteil der Gelenkverbindung vorzugsweise spanend angearbeitet ist, da hierdurch in technisch einfacher Weise eine Höheneinstellbarkeit des Stützfußes erreicht wird.

Auch ist es vorteilhaft, den Teller bereits mit Bohrungen zu versehen, da hierdurch über Befestigungsmittel der Stützfuß direkt mit Bodenflächen und Konstruktionsteilen verbunden werden kann.

Die Erfindung wird nachfolgend anhand von einem in Zeichnungen dargestellten Ausführungsbeispiel näher beschrieben. Es zeigen:
- Figur 1: eine Seitenansicht eines Stützfußes und
- Figur 2: eine Ausschnittsvergrößerung von Figur 1 aus dem Bereich des Kugelgelenkes des Stützfußes.

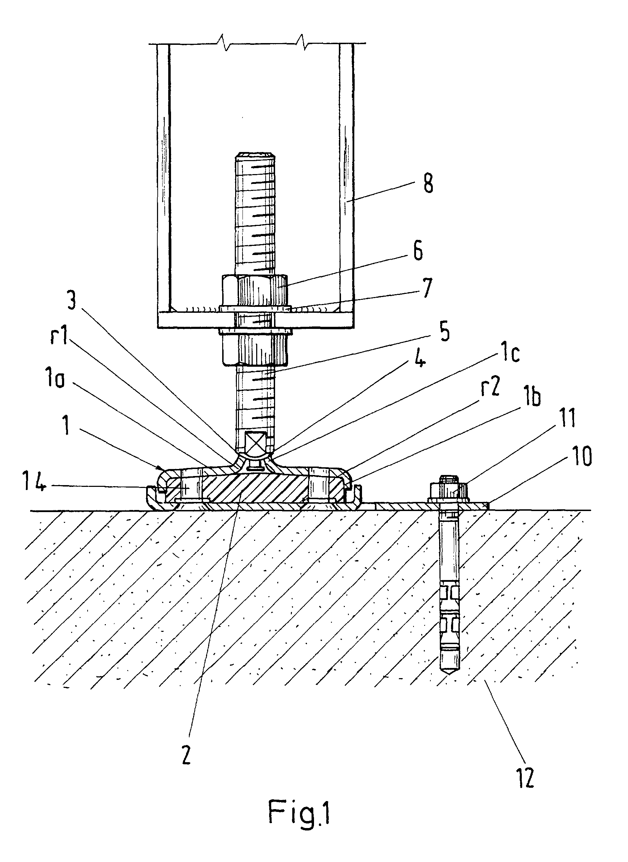

In der Figur 1 ist eine Seitenansicht eines Stützfußes dargestellt, der im wesentlichen aus einem Fußelement 1 und einem insbesondere als Gewindestange ausgebildetem Anschlußelement 5 besteht. Der Stützfuß dient über das Anschlußelement 5 zum Abstützen eines Tragrahmens 8 eines nicht dargestellten Förderers. Zur Höhenverstellbarkeit des Stützfußes ist das Anschlußelement 5 als Gewindestange ausgebildet, die über eine Kombination von Muttern 6 und Unterlegscheiben 7 den Tragrahmen 8 höhenverstellbar abstützt. An dem dem Tragrahmen 8 abgewandten Ende ist das Anschlußelement 5 über eine Art Kugelgelenkverbindung mit dem Fußelement 1 verbunden.

Dieses Fußelement 1 besteht im wesentlichen aus einem Teller 1a, der im wesentlichen mit seiner Oberfläche parallel zur Bodenfläche 12 oder einer sonstigen Befestigungsfläche verläuft. Der Teller 1a ist in Draufsicht gesehen ringförmig ausgebildet und geht an seinem inneren Rand über einen Radius r₁ in einen sich nach oben erstreckenden Tragabschnitt 1c über. Dieser zentral an den Teller 1a angeordnete Tragabschnitt 1c bildet mit seinem dem Teller 1a abgewandten Ende in Draufsicht gesehen eine Ringfläche 1d, die als Kugelaufnahme 3 der Kugelgelenkverbindung dient. Der äußere Durchmesser der Ringfläche 1d ist kleiner als der äußere Durchmesser der an dem Anschlußelement 5 angeordneten äußeren Begrenzung des Kugelkopfteils 4. Hierdurch wird erreicht, daß über die Ringfläche 1d die Stützkräfte des Anschlußelementes 5 direkt über den Tragabschnitt 1c und den Radius r₁ in den Teller 1a eingeleitet werden und auch bei aus der Vertikalen herausgeschwenkter Stellung der Kontakt zwischen Ringfläche 1d und Kugelkopfteil 4 erhalten bleibt. An dem dem Tragabschnitt 1c gegenüberliegenden und somit äußeren Rand des Tellers 1a ist ein zylinderförmiger Ansatz 1b über einen weiteren Radius r₂ angeordnet, der sich nach unten erstreckt. Hierdurch wird die dem Anschlußelement 5 gegenüberliegende Seite des Fußelementes 1 topfförmig ausgebildet und kann somit zur Aufnahme von zylinderförmigen Verbindungselementen dienen, um das Fußelement 1 mit der Bodenfläche 12 oder anderen Konstruktionselementen zu verbinden. Im vorliegenden Fall ist dieses Verbindungsmittel als Platte 2, vorzugsweise aus Dämpfungsmaterial, wie Gummi, hergestellt, die komplementär zu der topfförmigen Öffnung in dem Fußelement 1 ausgebildet ist. Hierdurch wird eine großflächige Übertragung der Stützkräfte von dem Teller 1a in die Platte 2 und von dort aus in die Bodenfläche 12 gewährleistet.

In dem dargestellten Ausführungsbeispiel des Fußelementes 1 ist der Teller 1a und dementsprechend auch die Platte 2 mit durchgehenden Bohrungen 14 versehen, um das Fußelement 1 mit der Platte 2 direkt mit der Bodenfläche 12 oder anderen Konstruktionsteilen, wie beispielsweise 1-förmigen Trägern, verschrauben zu können. Im vorliegenden Fall sind diese Bohrungen 14 zur Befestigung des Stützfußes nicht verwendet worden, da eine Verschraubung durch den Tragrahmen 8 behindert wird. Für derartige Einsatzfälle ist vorgesehen, das Fußelement 1 mit der Platte 2 auf eine Halteplatte 10 abzustellen. Diese Halteplatte 10 weist einen nach oben gebogenen Rand auf, so daß der Ansatz 1b des Fußelements 1 seitlich geführt wird. Darüber hinaus ist die Halteplatte 10 mit einer seitlichen Verlängerung versehen, die in der Draufsicht gesehen aus der Kontur des Tragrahmens 8 herausragt und somit für eine Verbindung der Halteplatte 10 über eine Verschraubung 11 mit der Bodenfläche 12 frei zugänglich ist. Eine zusätzliche Verschraubung des Fußelementes 1 mit der Halteplatte 10 ist möglich.

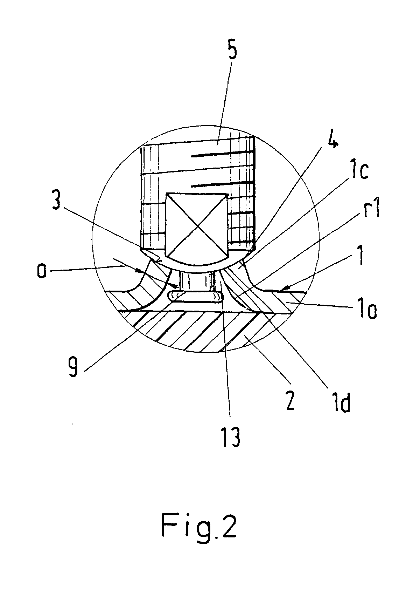

Ferner ist der Figur 1 zu entnehmen, daß das Fußelement 1 ausgehend von dem Ansatz 1b über den Radius r₂, den Teller 1a, über den Radius r₁ und den Tragabschnitt 1c eine durchgängige und im wesentlichen gleiche Materialdicke a aufweist und vorzugsweise als tiefgezogenes und verzinktes Blechteil hergestellt wird (s. Figur 1 in Verbindung mit Figur 2). Grundsätzlich ist es auch möglich, das Fußelement 1 aus Kunststoff herzustellen.

In der Figur 2, die eine Ausschnittsvergrößerung aus dem Bereich der Kugelgelenkverbindung von Figur 1 zeigt, ist zu entnehmen, daß das Anschlußelement 5 an dem dem Fußelement 1 zugewandten Ende als ein Kugelkopfteil 4 ausgebildet ist. Dieses Kugelkopfteil 4 wird durch spanende Bearbeitung, insbesondere Drehen des als Gewindestange gebildeten Anschlußelementes 5 hergestellt und bildet somit den Kugelkopf der Kugelgelenkverbindung. Die Kugelpfanne der Kugelgelenkverbindung ist durch die Ringfläche 1d des Tragabschnittes 1c gebildet, der über den Radius r₁ in den Teller 1a übergeht.

Des weiteren ist ersichtlich, daß die Ringfläche 1d eine Öffnung 13 begrenzt, durch die von unten das Anschlußelement 5 über ein Befestigungselement 9 mit dem Fußelement 1 lose verbunden ist. Das Befestigungselement 9 ist vorzugsweise als Schraube oder Niete ausgebildet, deren Kopf einen größeren Außendurchmesser aufweist als das Maß der Öffnung 13. Hierdurch ist gewährleistet, daß die Winkelverstellbarkeit des Anschlußelementes 5 gegenüber der Fußplatte 1 über die Kugelgelenkverbindung erhalten bleibt, jedoch die beiden Bauteile verliersicher miteinander verbunden sind. Hierzu weist der Kopf der Schraube oder der Niete im Einbauzustand des Anschlußelementes 5 einen ausreichenden Abstand zu der Innenwandung des Tragabschnittes 1c auf.

### Bezugszeichenliste

- 1: Fußelement
- 1a: Teller
- 1b: Ansatz
- 1c: Tragabschnitt
- 1d: Ringfläche
- 2: Platte
- 3: Kugelaufnahme
- 4: Kugelkopfteil
- 5: Anschlußelement
- 6: Mutter
- 7: Unterlegscheibe
- 8: Tragrahmen
- 9: Befestigungselement
- 10: Halteplatte
- 11: Verschraubung
- 12: Bodenfläche
- 13: Öffnung
- 14: Bohrungen
- a: Materialdicke
- r₁: Radius
- r₂: Radius

## Patentansprüche

1. Stützfuß, insbesondere zur Abstützung von Tragrahmen (8) für Förderer, mit einem eine Kugelaufnahme (3) aufweisenden Fußelement (1) zur Übertragung der Stützkräfte auf Bodenflächen (12) oder Konstruktionsteile und einem ein Kugelkopfteil (4) aufweisenden Anschlusselement (5) zur Bildung einer Gelenkverbindung mit der Kugelaufnahme (3), wobei das Fußelement (1) aus einem Teller (1a) mit einem rohrförmigen Tragabschnitt (1c) besteht,
**dadurch gekennzeichnet,**
**dass** der rohrförmige Tragabschnitt aus der Ebene des Tellers (1a) nach oben herausragt und die stirnseitige Ringfläche (1d) dieses rohrförmigen Tragabschnittes die Kugelaufnahme (3) bildet.

2. Stützfuß nach Anspruch 1,
**dadurch gekennzeichnet,**
**daß** der Tragabschnitt (1c) an den Teller (1a) angeformt ist.

3. Stützfuß nach Anspruch 2,
**dadurch gekennzeichnet,**
**daß** das Fußelement (1) als Formteil aus Blech hergestellt ist.

4. Stützfuß nach einem der Ansprüche 2 oder 3,
**dadurch gekennzeichnet,**
**daß** der Teller (1a) über einen Radius (r₁) in den Tragabschnitt (1c) übergeht und der Teller (1a) und der Tragabschnitt (1c) weitestgehend gleiche Materialdicke (a) aufweisen.

5. Stützfuß nach einem der Ansprüche 1 bis 4,
**dadurch gekennzeichnet,**
**daß** an dem Außenrand des Tellers (1a) ein ringförmiger Ansatz (1b) angeordnet ist, dessen Außenfläche weitestgehend rechtwinklig zur Oberfläche des Tellers (1a) und entgegengesetzt zu dem Tragabschnitt (1c) ausgerichtet ist.

6. Stützfuß nach Anspruch 5,
**dadurch gekennzeichnet,**
**daß** der Teller (1a) über einen Radius (r2) in den Ansatz (1b) übergeht und der Teller (1a) und der Ansatz (1b) weitestgehend gleiche Materialdicke (a) aufweisen.

7. Stützfuß nach Anspruch 5 oder 6,
**dadurch gekennzeichnet,**
**daß** in das von dem Teller (1a) und dem Ansatz (1b) gebildete topfartige Fußelement (1) eine Platte (2) eingesetzt ist, die zylinderförmig ausgebildet, aus einem Dämpfungsmaterial hergestellt und deren Grundfläche weitestgehend parallel zur Oberfläche des Tellers (1a) ausgerichtet ist.

8. Stützfuß nach einem der Ansprüche 1 bis 7,
**dadurch gekennzeichnet,**
**daß** das Fußelement (1) über ein Befestigungselement (9) in Funktion einer Verliersicherung mit dem Anschlußelement (5) verbunden ist und das Befestigungselement (9) ausgehend von dem Anschlußelement (5) durch eine von der Ringfläche (1d) begrenzte Öffnung (13) ragt.

9. Stützfuß nach einem der Ansprüche 1 bis 8,
**dadurch gekennzeichnet,**
**daß** Anschlußelement (5) als Gewindestange ausgebildet ist, an deren dem Fußelement (1) zugewandten Ende das Kugelkopfteil (4) angearbeitet ist.

10. Stützfuß nach einem der Ansprüche 1 bis 9,
**dadurch gekennzeichnet,**
**daß** in dem Teller (1a) mehrere Bohrungen (14) zur Befestigung des Tellers (1a) an Bodenflächen (12) oder Konstruktionsteilen über Befestigungsmittel angeordnet sind.

## Claims

1. Supporting foot, in particular for supporting carrying frames (8) for conveyors, having a foot element (1), which has a ball mount (3) and is intended for transmitting the supporting forces to floor surfaces (12) or structural parts, and having an attachment element (5), which has a ball-head part (4) and is intended for forming an articulated connection with the ball mount (3), the foot element (1) comprising a disc (1a) with a tubular carrying section (1c), **characterized in that** the tubular carrying section projects upwards from the plane of the disc (1a) and the annular surface (1d) at the end of this tubular carrying section forms the ball mount (3).

2. Supporting foot according to Claim 1, **characterized in that** the carrying section (1c) is integrally formed on the disc (1a).

3. Supporting foot according to Claim 2, **characterized in that** the foot element (1) is produced as a shaped part from sheet metal.

4. Supporting foot according to either of Claims 2 and 3, **characterized in that** the disc (1a) merges into the carrying section (1c) via a radius (r₁), and the disc (1a) and the carrying section (1c) have, for the most part, the same material thickness (a).

5. Supporting foot according to one of Claims 1 to 4, **characterized in that** arranged on the outer border of the disc (1a) is an annular extension (1b), of which the outer surface is oriented, for the most part, at right angles to the surface of the disc (1a) and in the opposite direction to the carrying section (1c).

6. Supporting foot according to Claim 5, **characterized in that** the disc (1a) merges into the extension (1b) via a radius (r₂), and the disc (1a) and the extension (1b) have, for the most part, the same material thickness (a).

7. Supporting foot according to Claim 5 or 6, **characterized in that** a plate (2) is inserted into the cup-like foot element (1) formed by the disc (1a) and the extension (1b), this plate being of cylindrical design, being produced from a damping material and having its surface area oriented, for the most part, parallel to the surface of the disc (1a).

8. Supporting foot according to one of Claims 1 to 7, **characterized in that** the foot element (1) is connected to the attachment element (5) in captive fashion via a fastening element (9) and the fastening element (9), starting from the attachment element (5), projects through an opening (13) bounded by the annular surface (1d).

9. Supporting foot according to one of Claims 1 to 8, **characterized in that** the attachment element (5) is designed as a threaded rod, which has the ball-head part (4) formed at its end which is directed towards the foot element (1).

10. Supporting foot according to one of Claims 1 to 9, **characterized in that** the disc (1a) contains a plurality of bores (14) for fastening the disc (1a) on floor surfaces (12) or structural parts via fastening means.

## Revendications

1. Pied d'appui, notamment d'appui de cadres (8) de support de convoyeurs, comprenant un élément (1) de pied qui a un logement (3) sphérique et qui est destiné à transmettre les forces d'appui à des surfaces (12) du sol ou à des parties de construction et un élément (5) de raccordement, qui a une partie (4) de tête sphérique et qui est destiné à former un assemblage à rotule avec le logement (3) sphérique, l'élément (1) de pied étant constitué d'un plateau (1a) ayant une partie (1c) de support tubulaire,
**caractérisé**
**en ce que** la partie de support tubulaire dépasse vers le haut du plan du plateau (1a) et la surface (1d) annulaire frontale de cette partie de support tubulaire forme le logement (3) sphérique.

2. Pied d'appui suivant la revendication 1,
**caractérisé**
**en ce que** la partie (1c) de support est d'un seul tenant avec le plateau (1a).

3. Pied d'appui suivant la revendication 2,
**caractérisé**
**en ce que** l'élément (1) de pied est fabriqué en tôle sous la forme d'une pièce conformée.

4. Pied d'appui suivant l'une des revendications 2 ou 3,
**caractérisé**
**en ce que** le plateau (1a) se transforme par un rayon (r₁) en la partie (1c) de support et le plateau (1a) et la partie (1c) de support ont, dans une grande mesure, une même épaisseur (a) de matière.

5. Pied d'appui suivant l'une des revendications 1 à 4,
**caractérisé**
**en ce que** sur le bord extérieur du plateau (1a) est disposé un prolongement (1b) annulaire dont la surface extérieure est dirigée dans une grande mesure perpendiculairement à la surface du plateau (1a) et en sens opposé à la partie (1c) de support.

6. Pied d'appui suivant la revendication 5,
**caractérisé**
**en ce que** le plateau (1a) se transforme par un rayon (r₂) en le prolongement (1b) et le plateau (1a) et le prolongement (1b) ont dans une grande mesure une même épaisseur (a) de matière.

7. Pied d'appui suivant la revendication 5 ou 6,
**caractérisé**
**en ce que** dans l'élément (1) de pied en forme de cuvette formé par le plateau (1a) et le prolongement (1b) est insérée une plaque (2), qui est de forme cylindrique, qui est en une matière d'amortissement et dont la surface de base est dirigée dans une grande mesure parallèlement à la surface du plateau (1a).

8. Pied d'appui suivant l'une des revendications 1 à 7,
**caractérisé**
**en ce que** l'élément (1) de pied est assemblé par un élément (9) de fixation en vue de procurer une sécurité vis-à-vis de la perte à l'élément (5) de raccordement et l'élément (9) de fixation fait saillie de l'élément (5) de raccordement par une ouverture (13) délimitée par la surface (1d) annulaire.

9. Pied d'appui suivant l'une des revendications 1 à 8,
**caractérisé**
**en ce que** l'élément (5) de raccordement est constituée en barre filetée à l'extrémité tournée vers l'élément (1) de pied de laquelle est usinée la partie (4) tête sphérique.

10. Pied d'appui suivant l'une des revendications 1 à 9,
**caractérisé**
**en ce qu'**il est prévu dans le plateau (1a) plusieurs trous (14) de fixation du plateau (1a) à des surfaces (12) de sol ou à des parties de construction par l'intermédiaire de moyens de fixation.
